# EUROPEAN PATENT APPLICATION

(11) **EP 1 341 195 A1**
(43) Date of publication of application: **03.09.2003**
(21) Application number: 02405160.9
(22) Date of filing: 01.03.2002
(51) Int. Cl.: H01G 4/38

(54) **Capacitive device**

(71) Applicant: ABB RESEARCH LTD., 8050 Zürich (CH)
(72) Inventor: Fuhrmann, Henning, 8048 Zürich (CH); Carlen, Martin, 5443 Niederrohrdorf (CH); Lakner, Martin, 5413 Birmenstorf (CH); Spjut, Henrik, 77143 Ludvika (SE); Jonsson, Johan, 77131 Ludvika (SE)
(74) Representative: ABB Patent Attorneys

(57) **Abstract**

The present invention is concerned with a capacitive device, and in particular a metallized film capacitor made of a capacitive base structure with series connected internal base capacitors (21,41,42,22), the structure being repeated any number of times by suitably winding or stacking. The capacitor comprises auxiliary intermediate electrodes (32,34) which on either side do face only one electrode (11,53,13) which is part of an adjacent conductive layer (1,5). The internal base capacitors have a larger active capacitor area than the internal base capacitors of a comparable capacitor of conventional design, and the problems due to misalignment of the conductive layers and deviations in active base capacitor area are reduced. Further, the auxiliary intermediate electrodes do not see large in-plane charging currents, and therefore can preferentially have a high sheet resistance and good self-healing properties.

## Description

### FIELD OF THE INVENTION

The invention relates to the field of capacitive devices such as capacitors or capacitive voltage dividers, and in particular to metallized film capacitors with internal series connections of individual base capacitors for high voltage applications. It proceeds from a capacitive device as described in the preamble of patent claim 1.

### BACKGROUND OF THE INVENTION

The application of metallized film capacitors in high-voltage systems has recently become technically and economically attractive with the commercial introduction of a metallized film capacitor designed for high-voltage DC applications. By way of an example, in this design two metallized polypropylene (PP) films are tightly wound around each other to form a cylindrical winding. Using small lateral offsets between the two films, the metal layers on the PP films can then be contacted by zinc-spraying the lateral side faces of the cylinder, and the winding thus forms a capacitor.

The voltage that can be applied between the electrodes of such a capacitor scales with the breakdown voltage of the PP film which serves as a dielectric for the capacitor. The breakdown voltage depends on the film thickness and on the film quality. In order to achieve higher voltages, the concept of internal series connections was introduced. Instead of using continuously metallized films, some stripes on the PP film extending along the so-called winding or machine direction can be left unmetallized, such that individual metallized tracks or areas extending in a direction parallel to the winding direction are formed. These metallized tracks then serve as electrodes for internal base capacitors. The latter form a series connection of capacitors between the outermost or contact electrodes which are contacted by zinc-spraying in a known manner. The voltage is then equally split over the series connected internal base capacitors, and the total voltage which can be applied to the capacitor is a multiple of the breakdown voltage of the PP film. Splitting up the total voltage is advantageous over using a thicker dielectric film, as the breakdown field strength generally decreases with increasing film thickness. Moreover, the self-healing capabilities as introduced below are limited by the voltage across the film rather than by the corresponding electric field. A metallized film capacitor of this type includig two segmented contact electrodes and a continuously metallized main intermediate electrode is disclosed e.g. in the UK Patent Application GB 2 276 765.

If the two metallized films are laterally misaligned during the winding process, a significant difference in the active capacitor area and hence in the capacitance of the internal base capacitors may occur. This will lead to an inhomogeneous voltage distribution, and a base capacitor with reduced active area will then experience a larger field, and hence more damage and electrode loss per time. These capacitors will loose capacitance more rapidly than the larger ones, and the system becomes unstable.

When higher voltages are needed, the number of internal series connections has to be increased in order to keep the electric field across the dielectric at the same level. In the design known in the art, this requires that more and more unmetallized stripes separating the conductive electrodes have to be accommodated per width of metallized film. This implies that more area has to be sacrificed for insulating purposes, thus decreasing the effective area of the capacitor.

Another drawback of the current technique is that there is only little room for the zinc-spray contacts at the edges of the contact electrodes or the lateral side faces of the cylinder. In fact, the spacing between adjacent electrodes of the same polarity due to the small lateral offset of the films is only of the order of the film thickness, e.g. 6-10 µm. The zinc-spray does not penetrate into these thin spacings very well, thus leading to contact problems.

Instead of winding or stacking, capacitors can also be produced by suitably folding two conductive layers separated by a dielectric layer as disclosed in the German Offenlegungsschrift DE 34 41 053 Al. Contact to the conductive layers is usually made along the folding lines at the front or back side of the capacitor, and not via a lateral side face.

For power capacitors, several techniques for improving the performance and/or the lifetime of the capacitor are known in the art. Electrodes of the self-healing type have proven to be beneficial in terms of lifetime, as they are thin enough to locally evaporate around a fault zone. In case of a discharge or short circuit, the energy of the electric arc then removes the surrounding metallization, thus isolating the area of the discharge and enabling the capacitor to remain in service with only a small loss in capacitance. The grading of the electrode thickness or the addition of current paths across the conductive layers or tracks as disclosed e.g. in DE 198 56 457, help to tune the sheet resistance of the electrodes. Another technique is the segmentation or patterning of the electrodes and the insertion of bridges with fusing properties between the segments.

### DESCRIPTION OF THE INVENTION

It is therefore an object of the invention to create a capacitive device, and in particular a film capacitor of the type mentioned initially, which is less sensitive to small lateral misalignments during the production process.

These objects are achieved by a capacitive device according to patent claim 1. Preferred embodiments are evident from the dependent patent claims.

A capacitive device according to the invention comprises a layered capacitive base structure which, by repeatedly winding, folding or stacking the latter, can be made into a film capacitor. The layered base structure itself comprises electrically conductive layers which are separated by electrically insulating layers serving as a dielectric. The conductive layers comprise two contact electrodes for establishing a contact to the device and a number of intermediate electrodes which are arranged, electrically spoken, between the contact electrodes on floating electrical potential. Each electrode is part of at least one internal base capacitor, and all the base capacitors are series connected. At least one of the intermediate electrodes, hereafter called *auxiliary* intermediate electrode, does form only one internal base capacitor via each of its two main surfaces, i.e. it does face only one electrode on each side. Said electrode is either a contact or an intermediate electrode, and is part of an adjacent conductive layer.

For a given total width of the device and for the same number of series connected internal base capacitors, in general the number of conductive layers is increased and the number of distinct or separated electrodes per conductive layer is reduced, leading to broader electrodes. Thus, the misalignment is less of a problem, as the base capacitors according to the invention are wider and a certain lateral misalignment of the conductive layers leads to a small relative change in active base capacitor area. In addition, upon repeating a certain base structure, the contact electrodes of the same polarity are separated by four or even more insulating dielectric layers of standard thickness, hence enabling easier contacting.

Preferentially, the electrically conductive layers are coatings applied to the insulating layers or dielectric films. This way, a conductive layer and its adjacent insulating layer are not individual sheets which have to be aligned separately and require a certain minimum thickness, but rather are combined into one metallized film. The resulting type of film capacitor is generally known as "metallized film capacitor". The number of foils that have to be wound thus is reduced by a factor of two, and more layers can be wound with conventional winding machines.

Furthermore, upon charging of the capacitive structure, essentially no current does flow in the plane of said auxiliary intermediate electrode, but only perpendicular to it. Hence, in a preferred embodiment of the device comprising metallized films, the auxiliary intermediate electrode shows good self-healing characteristics. This property generally implies a high sheet resistance of the electrode typically above 20 Ω□, and high Joule losses in case a current actually flows in the plane of the electrode layer. In the present case however, no appreciable in-plane currents do flow in the auxiliary intermediate electrodes, hence the prejudicial Joule heating generally associated with self healing electrodes does not occur. On the other hand, the contact electrodes and those *main* intermediate electrodes which have to carry the charging currents can be thicker and present a worse self-healing performance, but instead limit the dissipation and heating due to said charging currents. Accordingly, their sheet resistance generally is below 20 Ω□.

According to a further embodiment, a main surface of an auxiliary intermediate electrode does not entirely face an adjacent electrode, but extends beyond the edge of the latter. Said extension giving rise to an increased active capacitor area for the internal base capacitor which is formed on the opposite side of the auxiliary intermediate electrode, the total capacitance of the device is also increased. Yet in this case, the currents flowing in the plane of the auxiliary intermediate electrode will still be very small compared to the currents flowing in the main intermediate or the contact electrodes.

Of course, the techniques for improving the performance and/or the lifetime of the capacitor as set out in the introductory part can equally well be applied to the capacitive device according to the invention.

### BRIEF DESCRIPTION OF THE DRAWINGS

The subject matter of the invention will be explained in more detail in the following text with reference to preferred exemplary embodiments which are illustrated in the attached drawings depicting:
- Fig. 1: a wound film capacitor; schematically,
- Fig.2: a folded film capacitor, schematically,
- Fig.3, Fig.5: a cross section through a film capacitor according to the state of the art, and
- Fig.4, Fig.6, Fig.7,: a cross section through a film capacitor according to advantageous
- Fig.8, Fig.9, Fig.10: embodiments of the invention,

The drawings and in particular the relative thickness of the conductive and dielectric layers are not to scale. The cross sections are taken along a plane comprising a winding axis or a stacking direction. The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

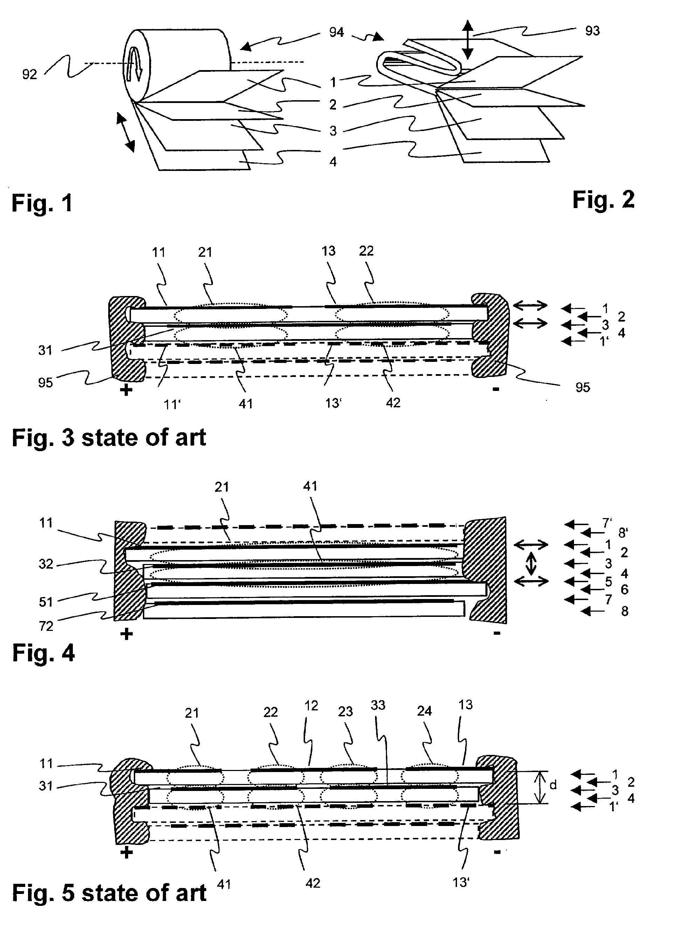

In Fig.1 is depicted a film capacitor winding of cylindrical shape, made of a repeatable base structure comprising four elongated rectangular layers 1,2,3,4. The latter are wound around a cylinder axis 92. In Fig.2 is shown a folded film capacitor obtained by suitably folding the base structure comprising the elongated rectangular layers 1,2,3,4. Instead of folding, the layers 1,2,3,4 may be cut into appropriately-sized pieces and stacked on top of each other along a stacking direction 93. Some of the layers can be electrically contacted via the lateral side faces 94 of the cylinder or the stack.

Instead of using four mechanically separated layers or individual sheets as in the case of the so-called film/foil capacitors, a conductive and an adjacent dielectric layer can be combined by coating a metallic material on at least one side of a dielectric film. This is most conveniently done by vapour deposition of the metal on polymeric films such as polycarbonate, polypropylene or polyester with high dielectric breakdown strength. The resulting metallized film capacitor may have arbitrarily thin metallic layers and is particularly suited to incorporate a capacitive structure according to the invention. However, it has to be pointed out that the invention is in no way limited to metallized film capacitors, but may equally well apply to other capacitive devices subject to high voltage, such as bushings, or other types of capacitors, such as e.g. ceramic capacitors.

Fig.3 shows a cross section through a film capacitor with two series connected internal base capacitors according to the state of the art. A first contact electrode 11 (taking e.g. the form of a track extending perpendicular to the plane of the cross section) and a neighbouring second contact electrode 13 form a first conductive layer 1 (represented by two thick horizontal lines). Adjacent to it is arranged a first electrically insulating dielectric layer 2, followed by a second conductive layer 3 and a further dielectric layer 4. The second conductive layer 3 comprises one main intermediate electrode 31. Two series connected internal base capacitors 21, 22 across dielectric layer 2 are depicted. A four-layer base structure 1234 which is made up of the aforementioned layers 1,2,3,4 is repeated once (dashed lines), but upon winding or stacking in a suitable way, can be repeated any number of times. This way, internal base capacitors 41,42 across dielectric layer 4 are formed between the first and second contact electrodes 11',13' of the first conductive layer 1' of the adjacent base structure 1234' and the intermediate electrode 31 of the original base structure 1234 and so forth. The contact electrodes 11,13,11',13' laterally protrude and form a suitable stagger or offset, and are contacted by an electrically conductive contact means 95 preferably applied by metal-spraying.

In Fig.4, a cross section through a film capacitor according to the invention, having the same width and number of internal series connected base capacitors as the capacitor in Fig.3 is shown. Here, the first contact electrode 11 is identical with the first conductive layer 1, and the second contact electrode 51 is identical with the third conductive layer 5. In between the two contact electrodes 11,51 is arranged an auxiliary intermediate electrode 32 which is identical to the second conductive layer 3, and which builds up base capacitors 21,41 with both contact electrodes 11,51. The capacitive device 12345 comprising the aforementioned conductive layers 1,3,5 and the dielectric layers 2,4 is completed to form a repeatable base structure 12345678 ready for winding or stacking by adding a forth conductive layer 7 with a further auxiliary electrode 72 and two more dielectric layers 6,8. Layers 7' and 8' belonging to a repeated base structure are shown on top of the original base structure 12345678 (dashed lines).

As is apparent from Fig.4, both main surfaces of the auxiliary intermediate electrode 32, i.e. its top and bottom surfaces in the plane of the layer extending perpendicular to the plane of the cross section, do entirely face either one of the contact electrodes 11,51. The latter extend over the whole width of the device, i.e. no separating stripes are present in the corresponding conductive layers 1,5. Compared to the capacitor known from Fig.3 where the first conductive layer 1 is made up of two electrodes 11,13 separated by a nonconductive stripe, the active capacitor area of the internal base capacitors is roughly doubled and lateral misalignments have a smaller relative effect.

Furthermore, an alternative base structure 12345 consisting only of the layers 1, 2, 3, 4 and 5 can be defined and may be folded along lines parallel to the plane of the cross section, as indicated in Fig.2. This way, layer 1 in fact comes in contact with itself and accordingly, the resulting contact electrode 11 has twice its original thickness. Layer 7' (dashed) in this case is identical to layer 3 and preserves its original thickness. Hence, the contact electrodes 11, 51 automatically are thicker and less resistive, whereas the auxiliary intermediate layer 3 keeps its original thickness and thus its good self healing properties. In the present case, two dielectric films are sufficient, one of them being coated on both sides.

Upon charging and discharging of the capacitor, charging currents indicated by horizontal double arrows to the right of the structures in Fig.3 and Fig.4 flow in the contact electrodes 11,13,51 and the intermediate electrodes 31 in the plane of the conductive layers 1, 3 and 5. On the other hand, the auxiliary electrodes 32, 72 according to the invention do not experience any current flow in, but only perpendicular to the plane of the conductive layer. This is indicated in Fig.4 by the small vertical double arrow.

Fig.5 shows a cross section through a film capacitor with four series connected internal base capacitors according to the state of the art. The first conductive layer 1 comprises 3 electrodes, i.e. the contact electrodes 11,13 and the intermediate electrode 12. The second conductive layer 3 comprises two main intermediate electrodes 31,33, forming four internal base capacitors 21,22,23,24 with the adjacent conductive layer 1 and four internal base capacitors 41,42,43,44 with the adjacent conductive layer 1' of the repeated base structure.

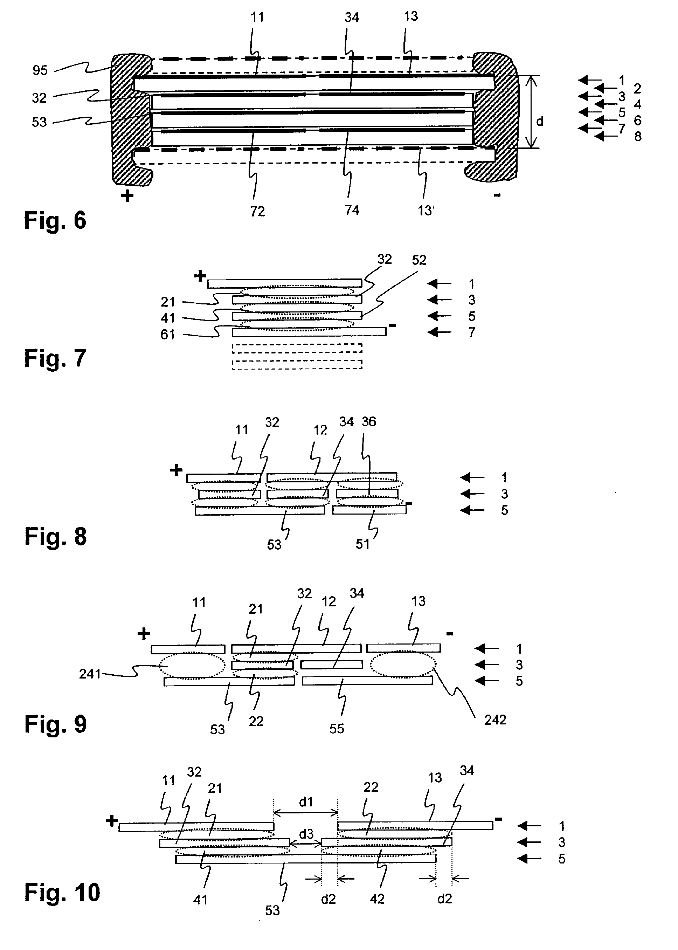

In Fig.6, a cross section through a film capacitor according to the invention, having the same width and number of internal series connected base capacitors as the capacitor in Fig.5 is shown. The first conductive layer 1 comprises the contact electrodes 11,13, the second conductive layer 3 comprises two auxiliary intermediate electrodes 32,34, and the third conductive layer 5 is identical with the main intermediate electrode 53. The base structure is completed with the forth conductive layer 7 comprising two further auxiliary intermediate electrodes 72,74 as in layer three, and the corresponding dielectric layers 2,4,6,8.

Comparing Fig.5 and Fig.6, it is apparent that the radial or vertical distance d between two successive contact electrodes of the same polarity 13,13' is twice as big for the capacitor according to the invention. Taking into account the generally rather thin thickness of the dielectric layers, the gain in the distance d greatly helps the contact means 95 to penetrate the space between said contact electrodes 13,13'. In the design according to the invention, the internal base capacitors are twice as large as in the conventional design, but as the base structure of the latter is only half as thick, the resulting volume of two capacitors of the same capacitance is equal. Further, the charging currents flowing in the novel design are also doubled, hence the need for thicker contact electrodes and/or additional current paths. Yet with these measures taken, the Joule heat per volume is not expected to rise above the value of a conventional design.

In the remaining figures, for the sake of clarity only the conductive layers of the capacitive device are shown, occasionally completed to form a repeatable base structure by adding further conductive layers.

In Fig.7, an example of a device with three series connected internal base capacitors 21,41,61 is depicted. The second and third conductive layers 3,5 each comprise an auxiliary intermediate electrode 32, 52. Two more conductive layers (dashed) underneath the second contact electrode layer 7 complete the base structure. In Fig.8 finally, the device contains six series connected internal base capacitors (dotted ellipse). The auxiliary intermediate electrodes 32,34,36 on conductive layer 3 each participate in two internal base capacitors together with a contact electrode 11,51 or a main intermediate electrode 12,53.

In Fig.9, a capacitive device is shown with six internal base capacitors. The auxiliary intermediate electrodes 32,34 are arranged exclusively between main intermediate electrodes. Hence, the contact electrodes 11,13 do not form contact capacitors 241,242 with *auxiliary* intermediate electrodes, but with adjacent *main* intermediate electrodes 53,55. In this case the thickness of the dielectric of the contact capacitors 241,242 is twice as large as the thickness of the internal base capacitors 21,22,41,42. The associated discrepancy in capacitance can be reduced by enlarging the active electrode area and therefore increasing the capacitance of the contact capacitors 241,242, resulting in a reduction of the electric field stress in the latter. In the same way, other combinations of internal base capacitors involving auxiliary intermediate electrodes and internal capacitors of the above "contact capacitor"-type are possible.

Virtually any number of internal series connections is possible by suitably combining intermediate and auxiliary electrodes as shown. Different types of electrodes can also be part of one and the same conductive layer.

In Fig.10 finally, a capacitive device similar to the one in Fig.6 is shown. However, the auxiliary intermediate electrodes 32,34 are broader than in the case of Fig.6 and not perfectly aligned with the adjacent electrodes 11,13,53. The lateral distance d3 between the auxiliary electrodes 32 and 34 is roughly half the lateral distance d1 between the neighbouring contact electrodes 11 and 13. The reason for this lies in the fact that the distance between neighbouring electrodes which are part of the same conductive layer is mainly determined by the voltage difference between these electrodes. In the design according to Figs. 6 and 10, the total voltage applied between the contact electrodes 11,13 drops in equal steps from one electrode to the adjacent one, hence the voltage difference over the distance d3 is half the total voltage.

The extension of the auxiliary intermediate electrodes 32,34 towards the mirror plane by a value of d2, which roughly equals half the distance d3, increases the active capacitor area of internal base capacitors 41 and 42. In order to prevent differing capacitances within the device, the same extension or broadening of the auxiliary intermediate electrodes 32,34 beyond the edge of the main intermediate electrode 53 is arranged for, such that the capacitance of the internal base capacitors 21 and 22 increases equally. The design according to Fig.10 with the broadened auxiliary intermediate electrodes 32,34 in fact leads to a gain in effective capacitor surface and hence in overall capacitance. Depending on the geometry, an increase in the order of 10% is expected.

### LIST OF REFERENCE SYMBOLS

- 1: First conductive layer
- 11,13: Contact electrodes
- 12: Main intermediate electrode
- 2: First dielectric layer
- 21,22: Internal base capacitors
- 3: Second conductive layer
- 31,33: Main intermediate electrode
- 32,34: Auxiliary intermediate electrodes
- 4: Second dielectric layer
- 41,42: Internal base capacitors
- 5: Third conductive layer
- 51: Contact electrode
- 52: Auxiliary intermediate electrode
- 53: Main intermediate electrode
- 6,8: Further dielectric layers
- 7: Forth conductive layer
- 72,74: Auxiliary intermediate electrodes
- 91: winding direction
- 92: cylinder axis
- 93: stacking direction
- 94: lateral side face
- 95: contact means

## Claims

1. A capacitive device with a multitude of electrically conductive layers separated by interposed insulating dielectric layers, comprising a first contact electrode (11), a second contact electrode (13,51) and a number of intermediate electrodes (12,31,32,33,34,52, 53), the electrodes each having two main surfaces, being part of one of the electrically conductive layers (1,3,5) and, via their main surfaces, forming series connected internal base capacitors (21,22,41,42) of approximately equal capacitance,
**characterized in that** the device comprises at least one auxiliary intermediate electrode (32,34,52) forming, via each of its two main surfaces, exactly one internal base capacitor (21,41) together with an electrode (11,13,51) which is part of an adjacent conductive layer.

2. The capacitive device according to claim 1, **characterized in that** it comprises at least one main intermediate electrode (12,31,33,53) forming, via one of its two main surfaces, two internal base capacitors (21,41) together with two electrodes (11,13,51) which are part of the same adjacent conductive layer.

3. The capacitive device according to claim 1 or 2, **characterized in that** the insulating layers (2,4,6,8) are provided in the form of polymeric dielectric films and that each electrically conductive layer (1,3,5,7) is a metallic coating applied to an adjacent insulating layer (2,4,6,8).

4. The capacitive device according to claim 3, **characterized in that** the auxiliary intermediate electrode (32,34,52) has a higher sheet resistance than the contact electrodes or the main intermediate electrodes.

5. The capacitive device according to claim 3, **characterized in that** at least one of the contact electrodes (11,13,51), the main intermediate electrodes (12,31,33,53) or the auxiliary intermediate electrodes (32,34,52) is segmented or graded or provided with additional current paths.

6. The capacitive device according to claim 3, **characterized in that** the lateral distance (d3) between two neighbouring auxiliary intermediate electrodes (32,34) which are part of a first conductive layer (3) is less than the lateral distance (d1) between two neighbouring electrodes (11,13) which are part of a second conductive layer (1) adjacent to the first conductive layer (3).

7. The capacitive device according to one of the preceding claims, **characterized in that** the device is a capacitor and that the contact electrodes (11,13,51) are contacted by a contact means (95) at lateral side faces (94) of the capacitor.

8. The capacitive device according to claim 7, **characterized in that** it is a stacked, a wound, or a wound and subsequently flattened capacitor.

9. The capacitive device according to claim 8, **characterized in that** n conductive layers (1,3,5,7) and n dielectric layers (2,4,6,8), where n is equal to four or a higher multiple of two, are repeatedly wound around a winding axis (92) or repeatedly stacked along a stacking direction (93).

10. The capacitive device according to claim 7, **characterized in that** it is a folded capacitor.
